# EUROPEAN PATENT APPLICATION

(11) **EP 4 596 894 A1**
(43) Date of publication of application: **06.08.2025**
(21) Application number: 25156112.2
(22) Date of filing: 05.02.2025
(51) Int. Cl.: F04D 29/38, F04D 29/02, F04D 29/62, B29C 65/00

(54) **FAN DEVICE AND RELATED MANUFACTORING METHOD**

(30) Priority: 05.02.2024 IT 202400002349
(71) Applicant: MMH Industries S.r.l., 35020 Tribano (PD) (IT)
(72) Inventor: MANTOVAN, Riccardo, 35020 Tribano (PD) (IT)
(74) Representative: Studio Torta S.p.A.

(57) **Abstract**

A fan device (1) is described comprising an electric motor (3) provided with a drive shaft (3a) coupled to a fan (4), which comprises a first module (5) consisting of a one-piece of molded thermoplastic material that is formed by a central hub (5a) and a plurality of first plate-shaped portions (5b) extending cantilevered from the central hub (5a) along longitudinal axes (B), and second modules (6) consisting of respective second plate-shaped portions (6a) molded in thermoplastic material, which have the axial ends stably connected by means of a weld or thermal joint to the axial ends of respective first plate-shaped portions (5a) in order to form the blades (7) of the fan (4).

## Description

### CROSS-REFERENCE TO RELATED APPLICATIONS

This patent application claims priority from Italian patent application no. 102024000002349 filed on February 5, 2024, the entire disclosure of which is incorporated herein by reference.

### TECHNICAL FIELD

The present invention relates to a fan device and a method for manufacturing it.

The present invention conveniently relates to a fan device configured to be mounted in a cooling and/or heating unit of a climate control and/or air conditioning system; to which the following discussion will explicitly refer without thereby losing generality.

### PRIOR ART

As is known, climate control systems are generally provided with a cooling and/or heating unit on which fan devices are mounted.

The fan devices typically comprise a fan that has a helix structure and is provided with a series of radial blades, variable in quantity, extending cantilevered from a central hub and angularly spaced apart from one another around the rotation axis of the fan, and an electric motor mechanically connected to the hub for driving the fan into rotation.

Currently, the fans of the fan devices of the above-mentioned cooling units, consist of a single one-piece (single body) made of thermoplastic material which is manufactured by means of an injection molding process with the use of molds specifically prearranged with an inner chamber for manufacturing the whole fan, i.e. consisting of the hub and the blades.

In particular, each fan corresponds to a specific mold having a shape specific for manufacturing the same. In other words, the molds are provided with an inner chamber, the shape and dimension of which correspond to the overall shape of the fan to be manufactured.

The use of multiple molds designed for manufacturing the one-piece fan, makes the manufacturing of the fan and consequently the production of the relative fan device, particularly complex and expensive, this being a condition that affects in a relevant manner the overall cost of the cooling unit of the climate control system.

### DESCRIPTION OF THE INVENTION

The object of the present invention is thus to manufacture a fan device that is configured to be used in a cooling device for climate control and/or air conditioning systems, and is provided with a fan having a particularly simple structure, cost-effective to manufacture.

According to the present invention, a fan device of a cooling and/or heating unit of a climate control and/or air conditioning system is manufactured and a method for manufacturing the fan device is provided as set forth in the appended claims.

The claims describe preferred embodiments of the present invention and form integral part of the present description.

### BRIEF DESCRIPTION OF THE DRAWINGS

The present invention will now be described with reference to the accompanying drawings, which illustrate a non-limiting example embodiment thereof, wherein:
Figure 1 schematically shows a climate control and/or air conditioning system provided with a cooling unit comprising a fan device manufactured according to the teachings of the present invention,
Figure 2 is a top view of a fan device shown in Figure 1,
Figure 3 is an exploded view, with parts removed for clarity, of a fan device manufactured according to the teachings of the present invention,
Figures 4 to 8 show as many operating steps of the method for manufacturing the fan of the fan device manufactured according to the teachings of the present invention,
Figure 9 is a side view of a blade of the fan of the fan device manufactured according to the teachings of the present invention,
Figure 10 is an enlarged view of a detail of a part of the blade shown in Figure 9,
Figure 11 is a top schematic view with parts in section of a portion of a blade of the fan of the fan device manufactured according to the teachings of the present invention,
Figure 12 is a section XII-XII of the portion of blade shown in Figure 11,
Figure 13 is a perspective view of a fan of a fan device manufactured according to a first manufacturing variation,
Figure 14 is a detail of an enlarged portion of a blade of the fan shown in Figure 13,
Figure 15 is a perspective view of a fan of a fan device manufactured according to a second manufacturing variation,
Figure 16 is a detail of an enlarged-scale portion of a blade of the fan shown Figure 15.

### PREFERRED EMBODIMENTS OF THE INVENTION

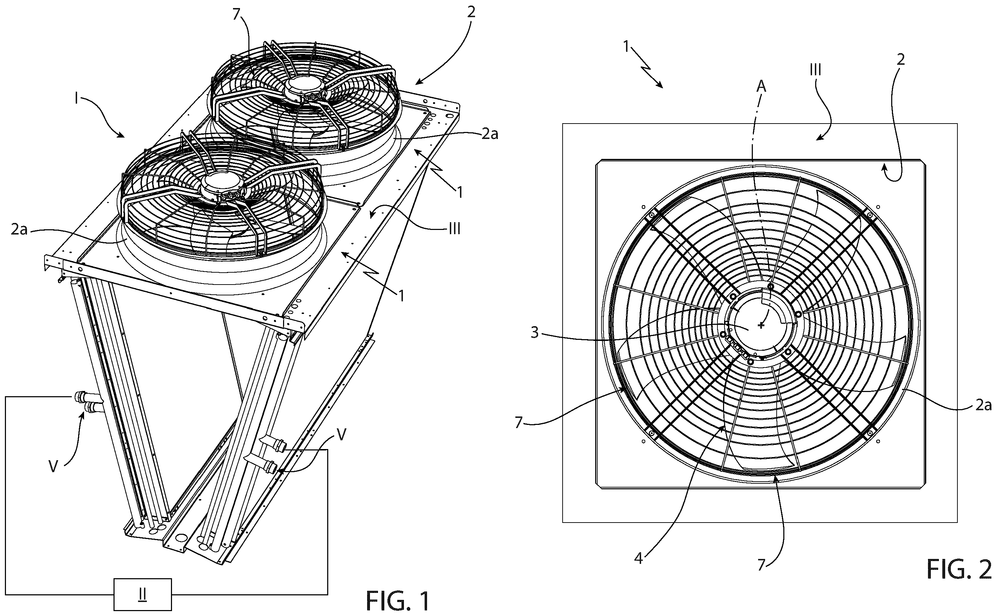

With reference to Figure 1, reference numeral I schematically indicates, as a whole, a cooling and/or heating unit comprising one or more fan devices 1.

In the example illustrated in Figure 1, the unit I comprises two fan devices 1 side by side. It is anyway understood that the present invention is not to be considered limited to the configuration shown in Figure 1, but it can be applied, on the basis of what will be described in the following, to a cooling and/or heating unit I comprising any number of fan devices 1.

The unit I is structured so as to be comprised in, be part of, be connected to, an air conditioning and/or climate control system II (generically schematized in Figure 1).

According to a possible exemplifying embodiment shown in Figure 1, the unit I can comprise, besides the fan device 1, a support casing III that supports at least one fan device 1 (two are shown in the example of Figure 1), a series of (known) components IV mounted on the support casing III and a series of ducts V that are passed through by a cooling fluid used by the air conditioning and/or climate control system and connect the components IV.

The air conditioning and/or climate control system II schematized in Figure 1 can comprise for example and optionally: an air conditioning machine (peripheral air conditioner), and/or a chiller, and/or a heat pump, and/or a rooftop. The system II can further be configured to air condition and/or climate control a data center and/or an industrial system or the like. The air conditioning and/or climate control system II schematized in Figure 1 is hydraulically connected to the unit I.

With reference to Figure 2, the fan device 1 can comprise a support casing or frame 2, an electric motor 3 and a fan 4 configured to rotate around a reference axis A. According to a preferred embodiment of the present invention, the fan device 1 is configured to generate an axial ventilation, namely the fan device 1 is an axial fan device. Conveniently, the fan device 1 can be a ducted axial fan device.

Conveniently, the support frame 2 can be structured so as to be coupled to the casing III of the unit I. Conveniently, the support casing o frame 2 can comprise a tubular duct portion 2a (commonly also called "nozzle") which internally houses the fan device 1. Conveniently, the fan device 1 is arranged coaxial to the tubular duct 2a so as to generate an air flow passing through the (known) components IV mounted on the support casing III.

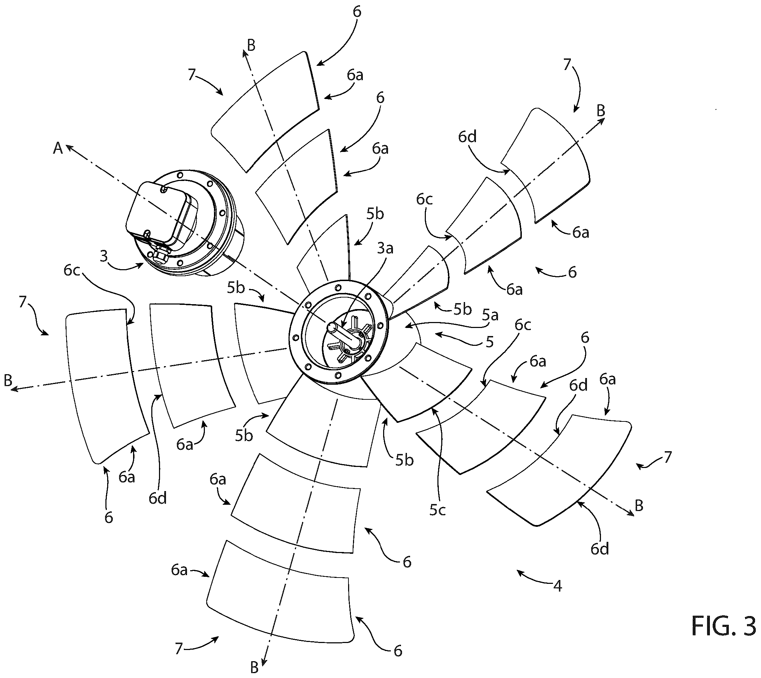

The electric motor 3 can be stably connected in a direct or indirect manner to the support frame 2 through mechanical connection devices. Preferably, the electric motor 3 is provided with an outer casing and a central drive shaft 3a (shown in Figure 3) which is configured to rotate around the reference axis A and is connected to the fan 4 for rotating it around the axis A.

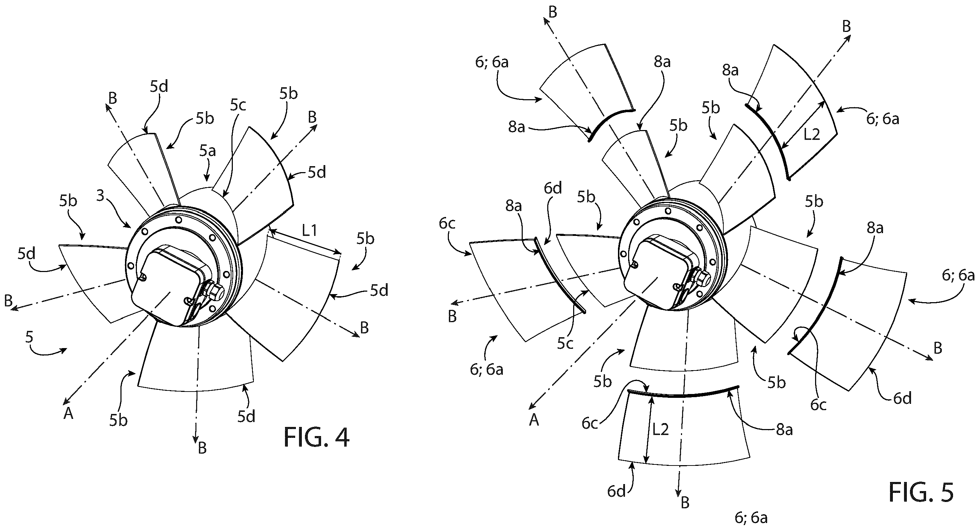

With reference to Figures 3 and 4, the fan 4 has a conveniently modular structure described in detail in the following discussion and comprises a substantially cylindrical central hub 5a, and a plurality of blades 7 which are arranged angularly spaced apart from one another around the axis A. The blades are further arranged on planes approximately transverse to the axis A. Conveniently, the fan 4 is an axial fan. Conveniently, the fan 4 is a paddlewheel fan. Conveniently, the fan 4 can be a ducted axial fan.

According to a preferred embodiment shown in Figures 3 and 4, the fan 4 comprises a first module 5 consisting of a central one-piece made of thermoplastic material by means of an injection molding process. In the example illustrated in Figures 3 and 4, the first module 5 is formed by the central hub 5a which is mechanically coupled to the drive shaft 3a for rotating with the same around the axis A, and a plurality of first plate-shaped portions 5b extending cantilevered from the central hub 5a along a radial direction, angularly spaced apart from one another around the reference axis A and constituting segments of the blades 7 of the fan 4.

According to a preferred embodiment shown in Figures 3 and 5, the fan 4 further comprises a plurality of second modules 6 consisting of respective second plate-shaped portions 6a. The second plate-shaped portions 6a are made of thermoplastic material and constitute segments of the blades 7 of the fan 4. The second plate-shaped portions 6a are connected to the radial ends of the respective first plate-shaped portions 5b so as to axially lengthen the segments of the first module 5 along the respective axes B so as to vary the axial length Li of the blades 4 along the axis B. Conveniently, the thermoplastic material can preferably and optionally comprise: polyamide and/or polypropylene reinforced with glass fiber, or similar thermoplastic polymers.

According to the preferred embodiment shown in Figures 4 and 5, the blade 7 can consist of a first blade segment formed by a first plate-shaped portion 5b and by at least a second blade segment formed by a second plate-shaped portion 6a stably connected to the first plate-shaped portion 5b so as to extend along the axis B.

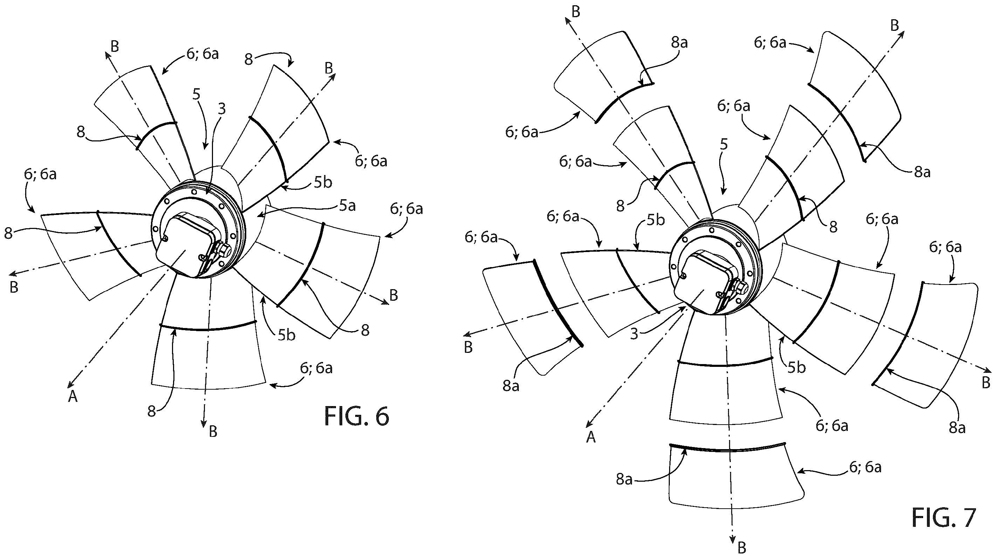

According to a preferred embodiment shown in Figures 6 and 7, the blade 7 can consist of a plurality of second plate-shaped portions 6a, which have their axial ends connected to the axial ends of respective second plate-shaped portions 6a so as to lengthen the portions of blade 7, formed by the first plate-shaped portion 5b and a second plate-shaped portion 6a.

The technical effect of the above-described modular structure is that of being able to manufacture fans 4 with different diameters and shapes, utilizing a single first module 5 common to all the fans 4 and a series of second modules 6 the number, dimensions, and/or shape of which can vary as a function of the dimension and/or shape of the fan 4 to be manufactured.

The modular structure, in fact, allows reducing the manufacturing costs of the fan 4 because, unlike the state of the art, the need to use multiple high-cost molds designed for the specific manufacturing of the entire fan by means of injection molding processes of thermoplastic material is eliminated.

In other words, the technical effect of the modular structure of the fan 4 is represented by the fact that it is possible to have a single first module 5 common to any fan which can be manufactured by means of a designed mold and to vary the length of the blades 7, by varying the number and/or the dimensions of the second plate-shaped portions 6a which, having a shape of reduced complexity with respect to the first module, can be manufactured by means of low-cost molds.

This, in fact, allows using a single mold common to all the fans 4 shaped for manufacturing the first module 5, and simultaneously a series of additional molds, more cost-effective with respect to the first one, usable for manufacturing the second modules 6 and usable each time on the basis of the outer diameter of the fan 4 to be manufactured.

For example: a fan 4 with an outer diameter of 970 mm, can comprise a first module 5 provided with a hub 5a having a diameter of 630 mm, and first plate-shaped portions 8 with length L1= 85, whereas the second plate-shaped portions 6a can have a length L2=85 mm; a fan 4 with an outer diameter of 500 mm, can comprise a first module 5 provided with a hub 5a having a diameter of 350 mm and first plate-shaped portions 8 with length L1= 40, whereas the second plate-shaped portions 6a can have a length L2=35 mm; a fan 4 with an outer diameter of 1000 mm, can comprise a first module 5 provided with a hub 5a having a diameter of 630 mm and first plate-shaped portions 8 with length L1= 85, whereas the second plate-shaped portions 6a can have a length L2=100 mm.

With reference to a preferred embodiment shown in Figures 3 and 4, the hub 5a can comprise a cup-shaped body having a substantially cylindrical shape. In the example shown in Figures 3 and 4, the hub 5a can be structured so as to be coupled to and/or mounted (keyed), in a freely rotatable manner (idle), on the cylindrical casing of the electric motor 3 so as to rotate around the axis A, and has the base (of the cup-shaped body) coupled to the drive shaft 3a.

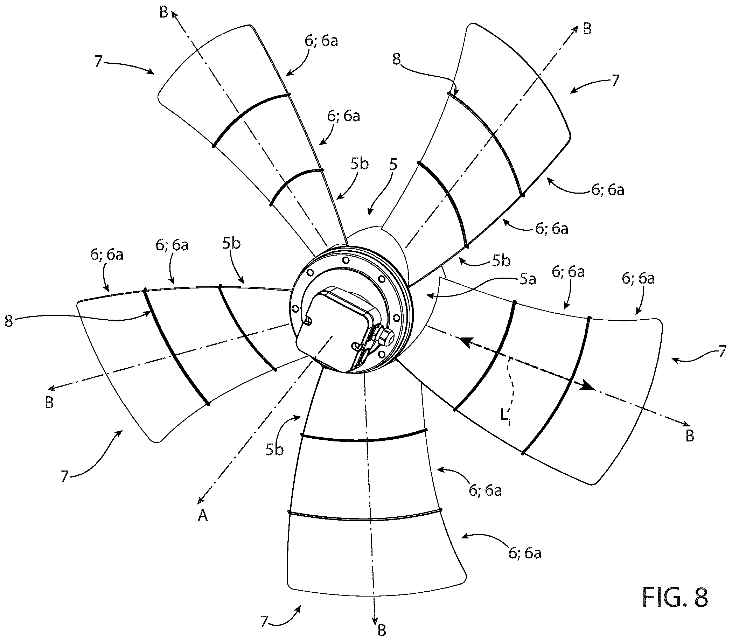

In the example illustrated in Figures 3 and 8, the blades 7 of the fan 4 (five shown in the figure) are each formed by a first plate-shaped portion 5b and by a plurality of second plate-shaped portions 6a (two in the example illustrated in Figures 3 and 8), wherein a second plate-shaped portion 6a (the one axially intermediate in Figures 3 and 8) is connected on one side to the first plate-shaped portion 5b and on the other side to another second plate-shaped portion 6a (axially external in Figures 3 and 8).

With reference to Figures 3, 4 and 5, the first plate-shaped portions 5b of the first module 5 and the second plate-shaped portions 6a of the second modules 6, have polygonal shapes, conveniently quadrangular with flat surfaces approximately transverse to the axis A.

In the illustrated example, the first plate-shaped portions 5b have a side 5c transverse to the axis B which is connected to the outer circular wall of the hub 5a, and a side 5d axially opposite the inner side 5c which extends approximately transverse to the axis B and is stably connected to a corresponding side 6c of the adjacent second plate-shaped portion 6a.

In Figure 5, the second plate-shaped portion 6a further has a side 6d transverse to the axis B which is connected, in turn, to the side 6c of the subsequent second plate-shaped portion 6a.

The side 6c of the second plate-shaped portion 6a and the side 5d of the first portion 5b are connected to each other by means of a weld or joint S. The sides 6c and 6d of the second plate-shaped portions 6a are mutually connected by means of a weld or joint S transverse to the axis B. Conveniently, the welds S of the sides 5d-6c and/or the sides 6c-6d, are made by means of a hot surface joining process or an ultrasound welding process or the like.

According to a preferred embodiment shown in Figures 4 to 10, the blades 7 are substantially plate-shaped and comprise one or more wings 8. The wing(s) 8 present in a blade 7 extend along a direction approximately transverse to the axis B of the blade 7. The wing(s) 8 give the blade 7 a finned profile, namely a Winglet profile. The fan 4 provided with finned blades is a Winglet fan. The wing(s) 8 of a blade 7 are structured so as to protrude cantilevered from one of or both the major opposite faces 7a of the blade 7.

The wings 8 have the technical effect of mitigating the generation of vortexes and radial motions by the fan 4 during its rotation. Laboratory tests performed by the Applicant demonstrated that the load losses introduced by the blades 7 with the wings 8 during the rotation of the fan 4, reduce and determine an improvement of the overall performance of the fan 4.

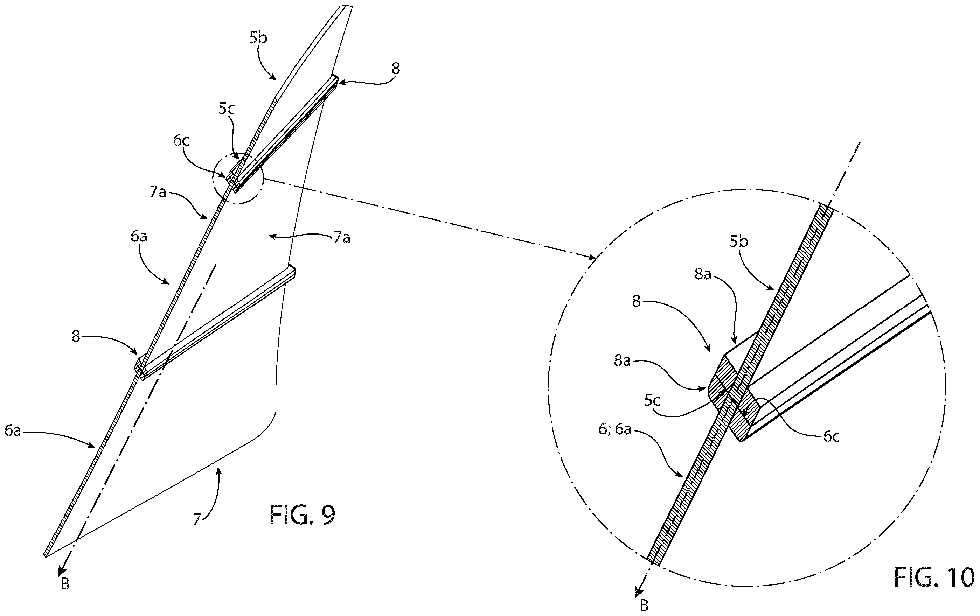

According to a preferred embodiment shown in Figures 9 and 10, a wing 8 of the blade 7 extends along the two sides 5c and 6c connecting the first plate-shaped portion 5b and the adjacent second plate-shaped portion 6a, respectively. According to a preferred embodiment shown in Figures 9 and 10, at least one other wing 8 of the blade 7 extends along the two sides 6d-6c connecting two adjacent second plate-shaped portions 6a.

Conveniently, a wing 8 of the blade 7 is formed by two half wings 8a, one of which is arranged along the side 5c of the first plate-shaped portion 5b and the other one is arranged along a side 6c of the second plate-shaped portion 6a. Similarly, at least one of the other wings 8 of the blade 7 is formed by two half wings 8a, one of which is arranged along a side 6d of a second plate-shaped portion 6a and the other one is arranged along a side 6c of another second plate-shaped portion 6a.

According to the preferred embodiment shown in Figure 10, the half wings 8a are formed by respective rectilinear projections or swollen edges made along the coupling side 5c of the first plate-shaped portion 5b and the sides 6c, 6d of the second plate-shaped portion(s) 5b. Conveniently, the half wings 8a are stably connected to one another by means of the respective adjacent and facing outer flanks. Conveniently, the half wings 8a can have an approximately rectangular cross-section, as is shown in the example of Figure 10.

The technical effect of the half wings 8a is, on the one hand, to increase the fixing area along the coupling sides of the plate-shaped portions, so as to prevent the detachment thereof and, on the other hand, to simplify the fixing operation between the plate-shaped portions during the manufacturing of the fan 4.

Conveniently, the first plate-shaped portions 5b of the first module 5 and the second plate-shaped portions 6a, defining the second modules 6, are dimensioned so as to have lengths L1 (Figure 4) and L2 (Figure 5), respectively, measured along the axis B of the blade 7 which depend on the outer diameter of the fan 4.

With reference to Figures 4 to 12, the method for manufacturing the fan device 1 will be described in the following. In the following discussion, the manufacturing of a fan device 1 comprising a fan 4 provided with a first module 5 will be assumed, wherein each blade 7 is formed by two modules 6.

The method comprises the step of prearranging the support frame 2, which in the example illustrated in Figure 2 is provided with the tubular portion 2a which delimits an inner through opening or duct preferably having an inner diameter larger than the outer diameter of the fan 4. The tubular portion 2a is structured for housing the fan 4. The support frame 2 is structured for being mounted in the unit I. The method comprises the steps of: prearranging the electric motor 3 structured for being stably connected to the support frame 2.

With reference to Figures 4 and 5, the method comprises the step of prearranging the first module 5 and the second modules 6.

The first module 5 is manufactured by means of an injection molding process of thermoplastic material on a first mold (not illustrated). The first mold has a first closed inner chamber, shaped so as to trace the shape (complementary shape) of the first module 5 so as to manufacture a one-piece consisting of the hub 5a and the first plate-shaped portions 5b.

The second modules 6 are manufactured by means of an injection molding process of thermoplastic material on second molds (not illustrated). The second molds each have a second closed inner chamber shaped so as to trace the shape (complementary shape) of the relative second module 6 so as to manufacture the second plate-shaped portions 6a.

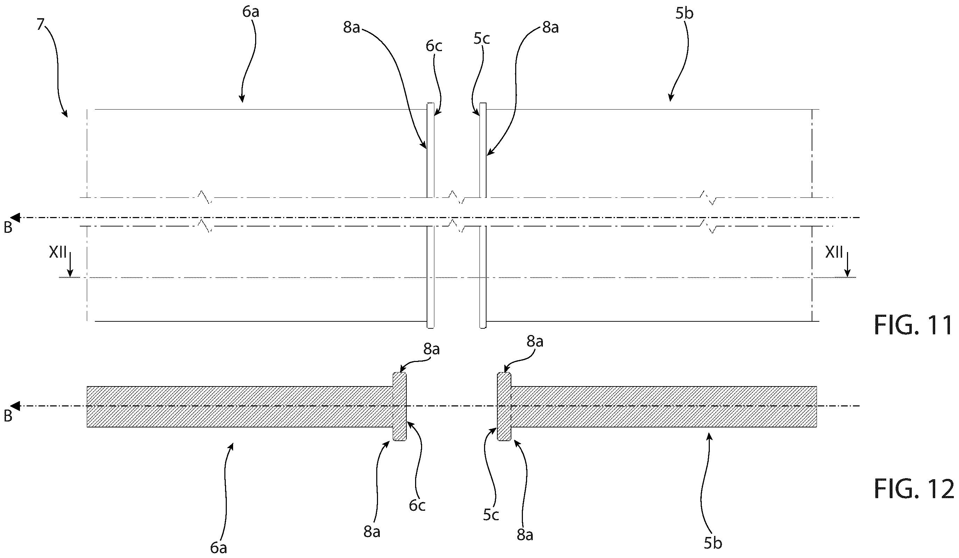

With reference to Figure 5, the method comprises the step of connecting the second plate-shaped portions 6a to the first plate-shaped portions 5b. In the illustrated example, the second plate-shaped portions 6a are arranged with the relative sides 6c in abutment against the sides 5d of the respective first plate-shaped portions 5b. In the illustrated example, the sides 6c of the second plate-shaped portions 6a are further stably fixed to the sides 5d of the respective first plate-shaped portions 5b conveniently by means of a weld. Preferably, in the case where the sides 5d and 6c are each provided with a half wing 8a, the welding between the half wing 8a of the plate-shaped portion 5b and the half wing 8a of the adjacent plate-shaped portion 6a is provided so as to also manufacture the wing 8 (Figures 11 and 12).

With reference to Figures 6 and 7, the method comprises the step of connecting the second plate-shaped portion 6a of each blade 7 (previously fixed to the first portion 5b) to another plate-shaped portion 6a. In the illustrated example, the second plate-shaped portion 6a is arranged with the side 6d in abutment against the side 6c of another subsequent plate-shaped portion 6a along the axis B. In the illustrated example, the side 6c of the second plate-shaped portion 6a is fixed to the side 6d of the other plate-shaped portion 6a conveniently by means of a weld. Preferably, in the case where the sides 6c and 6d are provided with respective half wings 8a, the welding between the same for joining the pair of second plate-shaped portions 6a and manufacture the wing 8 between them is provided. The above-described operations are reiterated for each blade 7.

When the fan 4 is completed, the method further comprises the steps of: coupling the hub of the fan 4 to the drive shaft 3, and mounting the electric motor 3 and the relative fan 4 on the support frame 2 so as to complete the manufacturing of the fan device 1.

The advantages of the above-described fan device are the following. The modular structure of the fan allows a wide range of possibilities for manufacturing different fans with moderate costs.

The presence of the wings allows improving the performance of the fans and obtaining a ventilation with the same performance even with nozzles, i.e. ducts of the support frame, having reduced overall dimensions, causing in such manner an overall dimensional reduction of the cooling and/or heating unit.

The manufacturing method allows reducing the costs of the molds and makes the fan producible in a simple, cost-effective and modular manner, keeping the aeraulic performance at least as efficient as the version without wings.

The overall cost of the molds used in the method for manufacturing the fan results to be reduced. In fact, the use of the common first mold is required for manufacturing the first module suitable for all the fans and a series of second molds of lower cost for manufacturing the second modules.

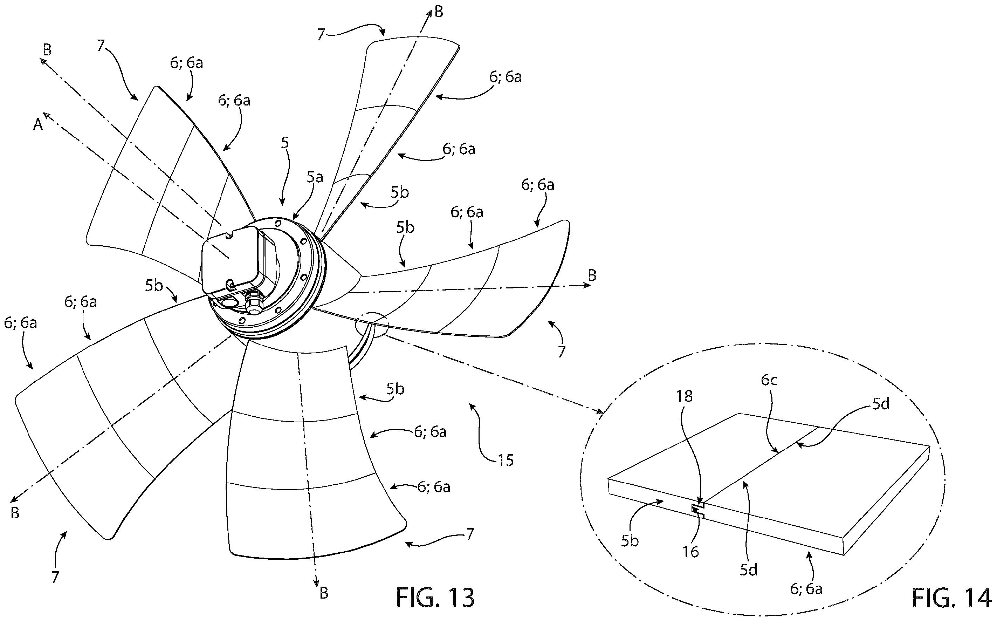

Figures 13 and 14 show a fan 15 that is similar to the fan 4 of the fan device 1 shown in Figures 1-9, and the parts of which will be indicated, when possible, by the same reference numerals that indicate corresponding parts of the annular radiator 40.

The fan 15 shown in Figures 13 and 14 differs from the fan 4 shown in Figures 4-12, due to the fact that the coupling between the sides 5d and 6c and/or between the sides 6d and 6c is made by means of a male-female connection mechanism. In the example illustrated in Figure 14, along the side 5d of the first plate-shaped portion 5b a (female) groove 16 is obtained inside which a protrusion or rib 18 is engaged, made along the side 6c of the second plate-shaped portion 6a. The fan 15 can further be structured such that along the side 6d of the second plate-shaped portion 6a a (female) groove 16 is obtained inside which a protrusion or rib 18 is engaged along the side 6c of the adjacent second plate-shaped portion 6a. Conveniently, the groove 16 and the rib 18 can be shaped in a complementary manner so as to make a mutual snap coupling.

The male-female coupling has the effect of simplifying the mounting of the second modules 6 both with the first module 5 and between them. The method can provide that following the coupling between the sides 5d and 6c and/or between the sides 6c and 6d, a permanent stable fixing operation is carried out in addition, for example a fixing operation that provides for a "hot" connection process between the same.

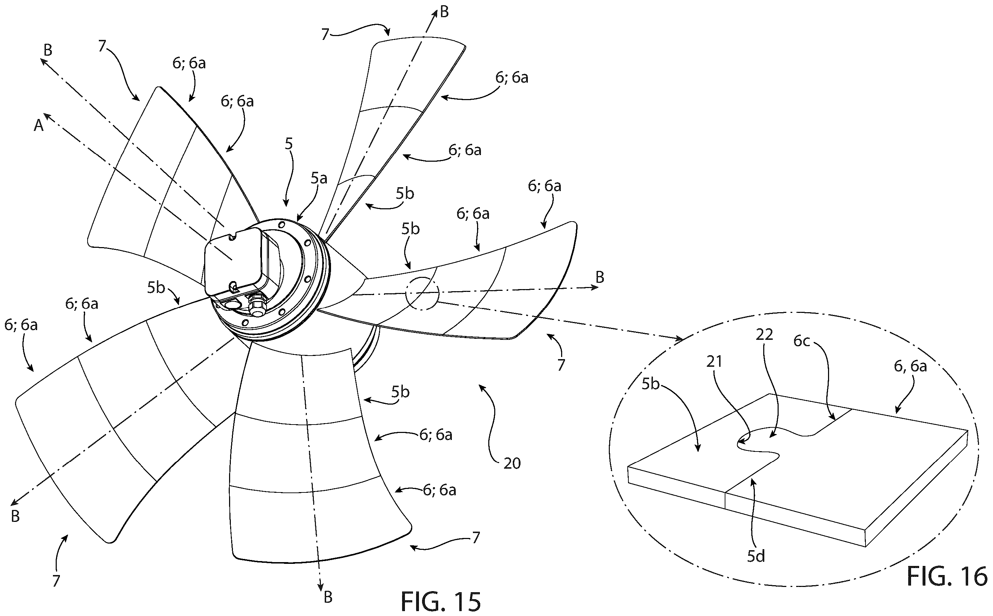

Figures 15 and 16 show a fan 20 that is similar to the fan 15 of the fan device 1 shown in Figures 13 and 14, and the parts of which will be indicated, when possible, by the same reference numerals that indicate corresponding parts of the fans 15 and 4.

The fan 20 shown in Figure 15 differs from the fan 15 shown in Figure 13 due to the fact that along the side 5d at least one (female) seat or recess 21 is obtained coplanar to the first plate-shaped portion 5b inside which a (male) plate-shaped portion 22 is engaged which protrudes from the side 6c of a second plate-shaped portion 6a. Similar to the above-described coupling between the portions 5b and 6a, the fan 20 can further be structured such that along the side 6c of a second plate-shaped portion 6a of the blade 7 at least one seat or recess 21 is obtained inside which a (male) complementary plate-shaped portion 22 is engaged protruding from the side 6c of another second plate-shaped portion 6a. The protruding portion 22 has a bidimensional geometrical shape and dimensions complementary to the geometrical shape and dimensions of the recess 21 so as to join to the same. Conveniently, additionally, each portion 22 can be fixed in a stable and permanent manner to the sides that delimit the recess 21 by means of a thermoplastic welding process or similar processes.

## Claims

1. A fan device (1) structured to be installed in a cooling and/or heating unit (I) of an air conditioning and/or climate control system (II),
the fan device comprises:
a support frame (2) structured to be coupled to said air conditioning and/or climate control system (II),
an electric motor (3) associated with the support frame (2) and provided with a drive shaft (3a) configured to rotate around a first axis (A),
a fan (4) that is coupled to said drive shaft (3a) in order to rotate around said first axis (A),
the fan (4) comprises a plurality of blades (7) extending radially cantilevered from a central hub (5a) along respective longitudinal second axes (B) and arranged angularly spaced apart from one another, around said first axis (A)
the fan (4) has a modular structure comprising:
a first module (5) consisting of a one-piece of molded thermoplastic material that is formed by a central hub (5a) coaxial to said first axis (A) and a plurality of first plate-shaped portions (5b) extending cantilevered from the central hub (5a) along said second longitudinal axes (B), and
second modules (6) consisting of respective second plate-shaped portions (6a) molded in thermoplastic material, which have the axial ends stably connected by means of a weld or thermal joint with the axial ends of respective first plate-shaped portions (5a) in order to form said blades (7).

2. The fan device according to claim 1, wherein said blade (7) comprises
a first plate-shaped portion (5b) having on the relative axial end a first side (5d) extending approximately transverse to said second axis (B), and at least a second plate-shaped portion (6a) adjacent to the first plate-shaped portion (5b),
the second plate-shaped portion (6a) has, on a relative axial end a second side (6c) facing the first plate-shaped portion (5b) that extends approximately transverse to said second axis (B), and is thermally welded with said first side (5c) of the first plate-shaped portion (5b).

3. The fan device according to claim 2, wherein a second plate-shaped portion (6a) of said blade (7) has a third side (6d) axially opposite the second side (6c), extending transverse to said second axis (B) and thermally welded with the second side (6b) of another second plate-shaped portion (6a).

4. The fan device according to any one of the preceding claims, wherein said blade (7) comprises at least one wing (8) extending along a transverse direction to said second axis (B) and is structured so as to protrude cantilevered from one or both of the opposite major faces (7a) of the blade (7).

5. The fan device according to claim 4, wherein the wing (8) of a blade (7) is formed by two half wings (8a), one of which is arranged along said first side (5d) of the first plate-shaped portion (5b) and the other half wing (8a) is arranged along said second side (6b) of the second plate-shaped portion (6a).

6. The fan device according to claim 4 or 5, wherein a wing (8) of a blade (7) is formed by two half wings (8a), one of which is arranged along said second side (6c) of a second plate-shaped portion (6a) and the other half wing (8a) is arranged along the third side (6d) of another second plate-shaped portion (6a).

7. The fan device according to claim 5 or 6, wherein the half wings (8a) are stably connected in pairs to each other on their respective outer flanks that are mutually adjacent and facing each other.

8. A method for manufacturing a fan device (1) structured to be installed in a cooling and/or heating unit (I) of an air conditioning and/or climate control system (II), wherein the fan device (1) comprises: a support frame (2) structured to be coupled to said air-conditioning and/or climate control system (II), an electric motor (3) associated with the support frame (2) and provided with a drive shaft (3a) configured to rotate around a first reference axis (A), and a fan (4) which is coupled to said drive shaft (3a) to rotate around said first axis (A) and comprises a plurality of blades (7) extending cantilevered from the central hub (5a) along respective second longitudinal axes (B) and are arranged angularly spaced apart from one another, around said first reference axis (A),
said method comprises the steps of
manufacturing a first module (5) of fan (4) by means of a material injection of thermoplastic material into a first mold so as to produce a one-piece of molded thermoplastic material that is formed by a central hub (5a) coaxial to said first axis (A) and a plurality of first plate-shaped portions (5b) extending cantilevered from the central hub (5a) along said second longitudinal axes (B), and
manufacturing second modules (6) by means of respective second molds other than said first mold in order to produce respective second plate-shaped portions (6a) molded in thermoplastic material,
connecting the axial ends of the second plate-shaped portions (6a) with the axial ends of respective first plate-shaped portions (5b) by means of welds or thermal joints so as to form the said blades (7).

9. Method according to claim 8, wherein
said first plate-shaped portion (5b) of a said blade (7) has on the relative axial end a first side (5c) extending approximately transverse to said second axis (B), and at least a second plate-shaped portion (6a) has on the relative axial end a second side (6c), oriented toward said hub (5a), extending approximately transverse to said second axis (B),
the method comprises the steps of
arranging the second side (6c) of the second plate-shaped portion (6a) resting on the first side (5c) of the first plate-shaped portion (5b),
thermally welding the second side (6c) of the second plate-shaped portion (6a) with said first side (5c) of the first plate-shaped portion (5b) so as to rigidly connect said second plate-shaped portion (6a) with the first plate-shaped portion (5b).

10. The method according to claim 9, wherein said second plate-shaped portion (6a) of a blade (7) has a third side (6d) axially opposite the second side (6c), extending transverse to said second axis (B)
the method comprises the steps of:
arranging the second side (6c) of a second plate-shaped portion (6a) resting on the third side (6d) of another adjacent second plate-shaped portion (6a),
thermally welding the second side (6c) of said second plate-shaped portion (6a) with said third side (6d) of said other second plate-shaped portion (6a) to form a one-piece body.
